Europäisches Patentamt

European Patent Office

Office européen des brevets

(11) Veröffentlichungsnummer: **0 306 643**
**A2**

## EUROPÄISCHE PATENTANMELDUNG

(21) Anmeldenummer: 88109984.0

(22) Anmeldetag: 23.06.88

(51) Int. Cl.⁴: **B29C 49/20 , B29C 49/42**

(30) Priorität: 11.09.87 DE 3730488

(43) Veröffentlichungstag der Anmeldung:
15.03.89 Patentblatt 89/11

(84) Benannte Vertragsstaaten:
**ES FR GB IT NL**

(71) Anmelder: **REHAU AG + Co**
**Rheniumhaus**
**D-8673 Rehau(DE)**

(72) Erfinder: **Der Erfinder hat auf seine Nennung
verzichtet**

(54) **Verfahren zur Herstellung eines Blasformkörpers.**

(57) Die Erfindung betrifft ein Verfahren zur Herstellung eines Blasformkörpers unter Verwendung einer zweigeteilten Blasform. Der Vorformling wird als Schlauch in thermoplastischem Materialzustand in die geöffneten Balsformhälften eingebracht und nach deren Schließen durch einen definierten Blasdruck an die inneren Konturen der Blasform angelegt. Nach der Abkühlung wird der Blasformkörper aus der geöffneten Blasform entnommen. Vor dem Aufblasen wird ein auf einer verschieblichen Haltevorrichtung befindliches Einbauteil bei geöffneter Blasform in den Vorformling eingebracht, der beim Schließen der Blasform mit einem Teil der Innenwandung des Vorformlings verbunden wird. Beim Schließen der Blasformhälften wird auf die Wandbereiche des Vorformlings, die einem als Verstärkungselement ausgelegten Einbauteil benachbart sind, ein Preßdruck ausgeübt. Dieser Preßdruck bewirkt eine Verringerung des Wandquerschnitts des Vorformlings im Bereich des Einbauteils. Spätestens mit dem Einsetzen des Preßdruckes von außen wird das Innere des Vorformlings von innen mit dem Blasdruck beaufschlagt.

# VERFAHREN ZUR HERSTELLUNG EINES BLASFORMKÖRPERS

Die Erfindung betrifft ein Verfahren zur Herstellung eines Blasformkörpers unter Verwendung einer zweigeteilten Blasform, wobei der Vorformling als Schlauch in thermoplastischem Materialzustand in die geöffneten Balsformhälften eingebracht und nach deren Schließen durch einen definierten Blasdruck an die inneren Konturen der Blasform angelegt sowie nach der Abkühlung aus der geöffneten Blasform entnommen wird, und wobei vor dem Aufblasen ein auf einer längsverschieblichen Haltevorrichtung befindliches Einbauteil bei geöffneter Blasform in den Vorformling eingebracht und beim Schließen der Blasform mit einem Teil der Innenwandung des Vorformlings verbunden wird.

Ein derartiges Verfahren ist aus der Europäischen Patentanmeldung 0 103 832 bekannt. In dieser Veröffentlichung ist die Herstellung eines Kraftstoffbehälters im Blasformverfahren beschrieben, in den während des Blasformens ein Einbauteil, z.b. ein Beruhigungstopf eingebracht wird. Dieser Beruhigungstopf wird beim Absenken des aus einem Extruder austretenden schlauchförmigen Vorformlings von einem gabelartigen Halteelement gehalten. Nach Beendigung des Absenkungsvorgangs und vor dem Schließen der Formteilhälften wird ein Haltedorn durch die Wandung des Vorformlings gestoßen, welcher nunmehr die Halterung des Beruhigungstopfes im Inneren des schlauchförmigen Vorformlings übernimmt. Das gabelförmige Halteelement wird danach bei noch geöffneter Blasform zurückgezogen. Beim Schließen der Blasformhälften wird über den Haltedorn, der ein Teil einer der beiden Blasformhälften ist, die Bodenfläche des Beruhigungstopfes an den zugeordneten Innenwandbereich des Formlings angepresst. In der Bodenfläche des Beruhigungstopfes sind Hinterschneidungen eingebracht, in welche das thermoplastische Kunststoffmaterial des Formlings beim Anpressen eindringt und den Beruhigungstopf an der Innenwand des Formlings festlegt.

Mit diesem bekannten Verfahren wird erreicht, daß eine mechanische Verbindung des Beruhigungstopfes mit dem Formling, also mit dem Kraftstoffbehälter, über zusätzliche Verbindungsmittel, vermieden wird. Eine solche mechanische Verbindung bringt immer den Nachteil mit sich, daß auf irgendeine Weise Öffnungen in die Wandung des Kraftstoffbehälters eingebracht werden müssen, welche bei der nachfolgenden Benutzung zu Lekkagen führen können. Die durch den Haltedorn bedingte Öffnung in der Wandung des fertiggestellten Kraftstoffbehälters nach dem bekannten Verfahren kann dagegen zum Anschluß des Gebers für die Tankinhaltsanzeige verwendet werden.

Der Nachteil des bekannten Verfahrens liegt in der aufwendigen Mechanik, die zunächst die Halterung des Beruhigungstopfes über das gabelartige Halteelement während des Extrusionsvorganges beinhaltet. Dieses gabelartige Halteelement muß nach Einführung des Haltedorns aus seinem Sitz entfernt werden, bevor der Schließvorgang der Blasformhälften erfolgen kann. Danach muß schließlich noch der Haltedorn selbst, der an einem Formstück im Beruhigungstopf angelenkt ist, beim Öffnen der Blasformhälften aus dem fertiggestellten Kraftstoffbehälter entfernt werden. Auch zeigt das vorbekannte Verfahren keine Lösungsmöglichkeit für eine Verstärkung eines Blasformkörpers.

Hier setzt die Erfindung ein, die es sich zur Aufgabe gestellt hat, einen Blasformkörper zu schaffen, der ohne Verwendung mechanischer oder sonstiger Befestigungsmittel in seinem Inneren in definierten Bereichen Verstärkungselemente besitzt, welche unverrückbar in ihrer beim Ausblasen des Vorformlings befindlichen Stellung gehalten sind. Erfindungsgemäß wird dazu vorgeschlagen, daß beim Schließen der Blasformhälften auf die Wandbereiche des Vorformlings, die dem Verstärkungselement benachbart sind, ein den Wandquerschnitt verringernder äußerer Pressdruck ausgeübt wird, und daß spätestens mit dem Einsetzen des Pressdruckes das Innere des Vorformlings mit dem Blasdruck beaufschlagt wird.

Gegenüber dem Stand der Technik wird mit dem erfindungsgemäßen Verfahren die Möglichkeit geschaffen, an definierten Bereichen eines Blasformkörpers Verstärkungselemente festzulegen. Hierbei ist die Figuration eines solchen Verstärkungselementes abhängig von der eigentlichen Gestaltung des fertigen Blasformkörpers. Es kann sich also um flache, langgestreckte Verstärkungselemente genauso handeln wie um ovale, runde und anderswie gestaltete Elemente. Wichtig bei der Auswahl des Verstärkungselementes und seiner Figuration ist unter anderem, daß an seiner Oberfläche Bereiche geschaffen sind, die den beim Schließen der Blasformhälften einsetztenden Pressdruck eine entsprechende Gegenkraft entgegensetzen, welche zu der erfindungsgemäßen Verringerung des Wandquerschnitts des Vorformlings in diesen Bereichen beiträgt.

Über diesen Pressdruck wird das thermoplastische Material aus der Wandung des Vorformlings in dessen verbleibenden Hohlraum eingepresst. Dies bedeutet, daß das Verstärkungselement nicht den gesamten Hohlraum des Vorformlings einnimmt, sondern daß nach seinem Einsetzen noch entsprechende Hohlräume verbleiben, die auch bei der Ausformung des Blasformkörprs erhalten bleiben. Derartige Hohlräume sind notwendig, um trotz des Einsetzens von Verstärkungselementen eine Zirkulation der Blasluft im Inneren des Blasformkörpers bis zur Beendigung des Ausformungsvorgangs zu ermöglichen.

Das über den Pressdruck verpresste plastische Material wird über den im verbliebenen Hohlraum angelegten Blasdruck in seiner Fließrichtung beeinflußt. Dies bedeutet, daß das verpreßte Material nicht unqualifiziert in den verbleibenden Hohlraum des Blasformkörpers eindringt, sondern über den angelegten Blasdruck an die freiliegenden Randbereiche des Verstärkungselementes angelegt und dort verpresst wird.

Für diesen Vorgang ist es erforderlich, daß wenigstens mit dem Einsetzen des Pressdruckes das Innere des Vorformlings mit einem Blasdruck beaufschlagt wird. Dies ist deshalb von Wichtigkeit, weil damit gleich zu Beginn des Pressvorganges die Richtung des in den Hohlraum eingepressten thermoplastischen Materials zu den freiliegenden Randbereichen des Verstärkungselementes vorbestimmt wird.

In einer vorteilhaften Weiterbildung des erfindungsgemäßen Verfahrens werden die freiliegenden Randbereiche des Verstärkungselementes vollflächig von dem thermoplastischen Material bedeckt. Hierbei bilden sich stegartige Brücken zwischen den Innenwänden des Blasformkörpers, welche durch den aufrecht erhaltenen Blasdruck bis zur Beendigung des Blasformvorgangs in ihrer Form gehalten werden. Diese Möglichkeit schafft über die bloße Halterung des Verstärkungselementes im Inneren des Blasformkörpers hinaus eine zusätzliche Verstärkung des Blasformkörpers durch die stegartige Brückenbildung. Eine solche zusätzliche Verstärkungsmöglichkeit bietet Vorteile bei stark beanspruchten Blasformkörpern, z.b. bei solchen, die im Kraftfahrzeugbau, bei Sportgeräten, usw. Verwendung finden.

Zusätzlich zu den weiteren Verstärkungsmöglichkeiten über die Brückenbildung können weitere Brücken zwischen den Innenwänden des Blasformkörpers über beliebig geformte Durchgangsöffnungen in den Verstärkungselementen selbst gebildet werden. Solche Durchgangsöffnungen können beispielsweise Bohrungen oder Ausstanzungen der verschiedensten Form sein. So können runde oder anders geformte Durchbrüche, Schlitzöffnungen, ringartige Öffnungen uzw. verwendet werden. Alle diese Maßnahmen dienen zu einer Erhöhung der Widerstandskraft solchermaßen ausgestatteter Blasformkörper gegen von außen ansetzende Krafteinwirkungen.

Als Ausgangsmaterialien für die Herstellung erfindungsgemäßer Blasformkörper sind alle polymeren Materialien denkbar. Als Verstärkungselemente können kompakte, geschäumte oder hohle Einlageteile aus Holz, Metall, Kunststoff, Papier, Pappe, faserverstärkten Elementen, usw. verwendet werden. Ein solches Verstärkungselement kann mit oder ohne Durchbrüche an einer besonders beanspruchten Stelle eines Blasformkörpers angeordnet sein. Bei langgestreckten Blasformkörpern empfiehlt es sich, mehrer solcher Verstärkungselemente hintereinander im Inneren vorzusehen. Hierbei können durch entsprechende Abstandhalter die einzelnen Verstärkungselemente in definiertem Abstand voneinander im Inneraum des Blasformkörpers gehalten werden. Derartige Abstandhalter, die z.B. in Stangenform aus Metall, Kunststoff usw. bestehen können, bleiben nach Beendigung des Blasformvorganges im Inneren des hergestellten Blasformkörpers, ohne daß die mit dem erfindungsgemäßen Verfahren erzielten positiven Verstärkungswirkungen in irgendeiner Form beeinträchtigt würden. Erforderlich ist hierfür lediglich, daß die Querschnittsfläche der Abstandhalter gleich oder geringer ist als die Querschnittsfläche der Verstärkungselemente.

Das oder die Verstärkungselemente können über eine längsverschiebliche Haltevorrichtung in den Vorformling eingebracht werden. Es hat sich hierbei als optimal gezeigt, daß die Blasnadel, über welche der Blasdruck in das Innere des Vorformlings eingebracht wird, gleichzeitig als Träger des oder der Verstärkungselemente wirkt. In diesem Fall darf dann natürlich die Ausblasöffnung nicht an der Spitze der Blasnadel angebracht sein, sondern sie muß irgendwo unterhalb der Spitze in dem Bereich der Blasnadel angeordnet sein, welche nach Schließen der Blasformhälften noch im Inneren des Vorformlings verbleibt.

Neben dem einfachen Festlegen von Verstärkungselementen durch Herumführen des über den Pressdruck ins Innere des Blasformkörpers verpressten thermoplastischen Materials um die Kanten der Verstärkungselemente mittels des entgegenwirkenden Blasdrucks ist als besonderer Vorteil des erfindungsgemäßen Verfahrens die Möglichkeit der Brückenbildung zwischen den Innenwänden des Blasformkörpers herauszustellen. Auf diese Weise lassen sich zusätzlich zur Verstärkung des Blasformkörpers durch die Einbringung des Verstärkungselementes erhöhte Verstärkungsmöglichkeiten von Blasformkörpern in besonders beanspruchten Zonen schaffen.

In der Zeichnung sind Ausführungsbeispiele von nach dem erfindungsgemäßem Verfahren innerhalb von Blasformkörpern gehaltenen Verstärkungselementen dargestellt; es zeigt:

Fig. 1 einen Blasformkörper im Teilschnitt mit eingebrachtem Verstärkungselement und Durchbrüchen.

Fig. 2 einen Blasformkörper im Teilschnitt mit mehreren Verstärkungselementen.

Fig. 3 verschiedene Querschnitte von Blasformkörpern mit Verstärkungselementen.

Fig. 4 Variationsmöglichkeiten von Verstärkungselementen.

Fig. 5 Blasformkörper mit gehaltertem Verstärkungselement.

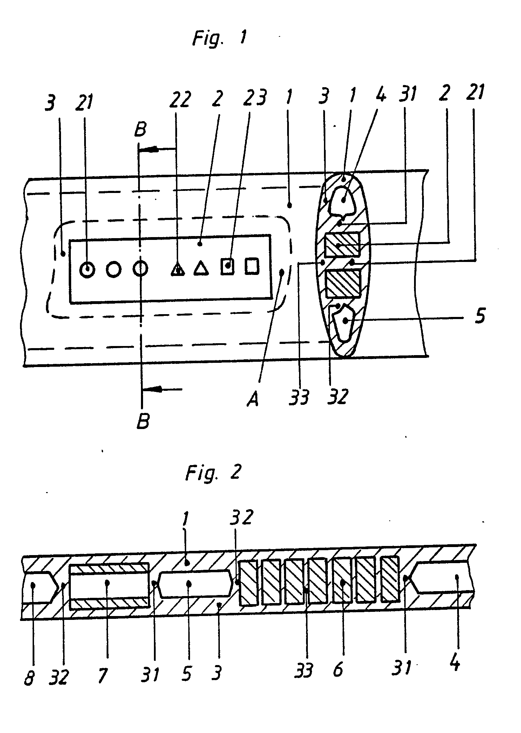

Der in Fig. 1 gezeigte Teilschnitt eines Blasformkörpers 1 zeigt in dem Ausschnitt A das Verstärkungselement 2. Das Verstärkungselement 2 ist allseitig von dem thermoplastischen Material 3 aus der Wand des Blasformkörpers 1 umschlossen. In das Verstärkungselement sind Durchbrüche 21, 22, 23 verschiedener Figurationen eingebracht.

Im rechten Bereich der Fig. 1 ist der Querschnitt längs der Linie B-B aus Fig. 1 dargestellt. Aus dieser Querschnittsdarstellung ist zu ersehen, daß der Durchbruch 21 mit dem thermoplastischen Material der Wandung des Blasformkörpers 1 gefüllt ist. Es ist weiter zu erkennen, daß das thermoplastische Material 3 in die Hohlräume 4, 5 eingepresst worden ist und dort an die freiliegenden Randbereiche des Verstärkungselementes 2 unter Bildung der Brücken 31, 32 angepresst ist. Zusätzlich zu diesen beiden Brücken ist über den Durchbruch 21 eine weitere Materialbrücke 33 entstanden. Diese Materialbrücken sind mit den zugeordneten Wandbereichen des Blasformkörpers 1 einstückig verbunden.

Aus der Querschnittszeichnung in Fig. 1 ergibt sich ferner, daß die Wandbereiche des Blasformkörpers 1 im Bereich des Verstärkungselementes 2 dünner sind als die Wandbereiche gegenüber den Hohlräumen 4, 5. Das aus den ersteren Wandbereichen nach dem erfindungsgemäßen Verfahren verpresste thermoplastische Material ist zur Bildung der brückenartigen Stege 31, 32, 33 verwendet worden. Hierbei hat neben dem von außen kommenden Pressdruck der innen in den Hohlräum 4, 5 angelegte Blasdruck das Anlegen des eingepressten Materials an die freiliegenden Randbereiche des Verstärkungselementes bewirkt.

Fig. 2 zeigt einen langgestreckten Blasformkörper 1 im Teilschnitt mit mehreren hintereinander angeordneten Verstärkungselementen 6, 7. Das Verstärkungselement 6 aus Fig. 2 weist Durchbrüche 21, 22, 23 der zu Fig. 1 beschriebenen Art auf, während das Verstärkungselement 7 ohne solche Durchbrüche ist. In den Hohlräum 4, 5, 8 können nicht gezeigte Abstandhalter eingebracht sein, die die Verstärkungselemente 6, 7 und im Bedarfsfall noch weitere Verstärkungselemente in ihrer Lage während des Blasformvorgangs halten. Auch die in Fig. 2 dargestellten Verstärkungselemente 6, 7 sind durch Brückenbildung 31, 32 und 33 in besonders verstärkender Form im Inneren des Blasformkörpers 1 festgelegt.

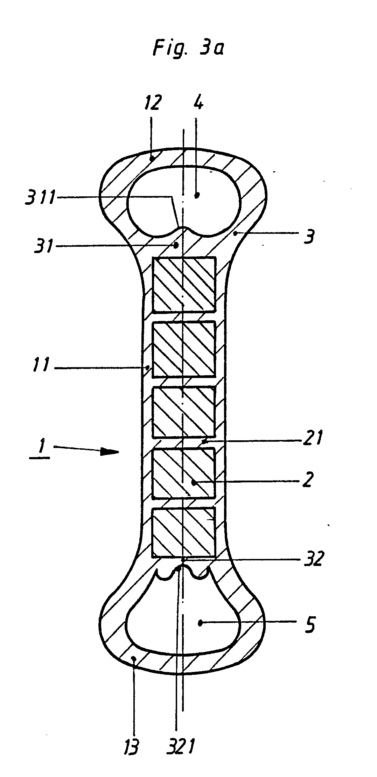

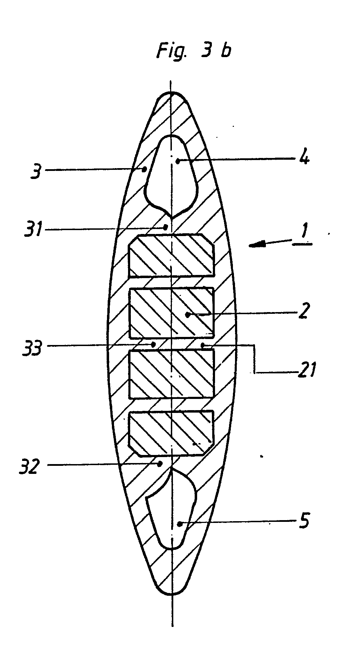

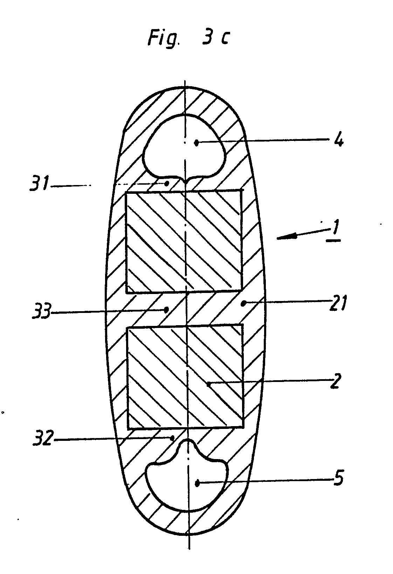

In Fig. 3 sind verschiedene Querschnittsformen von Blasformkörpern mit Verstärkungselementen dargestellt.

Fig. 3a zeigt einen Blasformkörper 1 mit einem gestreckten Mittelteil 11 und an diesen angeformten keulenartigen Verdickungen 12, 13. In die keulenartigen Verdickungen 12, 13 sind die Hohlkammern 4, 5 eingebracht. Das Verstärkungselement 2 ist mit Durchbrüchen 21 versehen. In diese Durchbrüche ist durch Verpressen des thermoplastischen Materials aus der Wand 3 eine stegartige Brückenbildung zwischen den Wandungen des Blasformkörpers erfolgt. Ebenfalls sind stegartige Brückenbildungen 31, 32 an den freiliegenden Randbereichen des Verstärkungselementes gebildet. Die stegartige Brücke 31 besitzt hier eine in die Hohlkammer 4 ausgelenkte spitzenartige Erhöhung 311, während die stegartige Brücke 32 eine wellig geformte Oberfläche 321 besitzt. Diese unterschiedlichen Figurationen in den Oberflächenbereichen der stegartigen Brücken 31, 32 entstehen beim Aufeinandertreffen der beiden Druckbereiche äußerer Anpressdruck und innerer Blasdruck. Es kommt hier zu keinen glattwandigen Ausführungen in diesen Bereichen, da beim Aufeinandertreffen der durch den äußeren Pressdruck nach innen fließenden thermoplastischen Massen zunächst das Anlegen an die freiliegenden Randbereiche des Verstärkungselementes 3 erfolgt, wonach das weiterfließende thermoplastische Material in die Hohlkammern 4, 5 auslenkt. Dies kann auch der darin herrschende Blasdruck nicht verhindern.

Aus der Darstellung Fig. 3a geht klar hervor, daß die Wanddikken des Blasformkörpers 1 im Bereich der keulenartigen Verbreiterungen 12, 13 größer sind als die Wanddicke über dem langgestreckten Mittelabschnitt 11. Diese Wanddickenunterschiede sind in der Verpressung des thermoplastischen Materials durch den äußeren Pressdruck in das Innere des Blasformkörpers 1 begründet.

Fig. 3b zeigt einen anderen Querschnitt des Blasformkörpers 1, den man als Spindelform bezeichnen kann. Das Verstärkungselement 2 ist in dem Blasformkörper 1 entsprechend der Querschnittsdarstellung in Fig. 1 eingelassen. Gleiche Merkmale haben hier dieselben Bezugszeichen erhalten wie dort. Besonders auffallend sind auch hier die Oberflächengestaltungen der brückkenartigen Stege 31, 32. Auch in diesem Fall ist die Wanddicke des Blasformkörpers im Bereich der Hohlkammern 4, 5 größer als über dem Verstärkungselement 2.

Fig. 3c zeigt eine weitere mögliche Querschnittsform des Blasformkörpers 1 mit eingelegtem Verstärkungselement 2, wobei sich die Merkmale in gleicher Form ergeben wie zu den vorher beschriebenen Querschnitten. Auch hier haben gleiche Merkmale die gleichen Bezugszeichen erhalten.

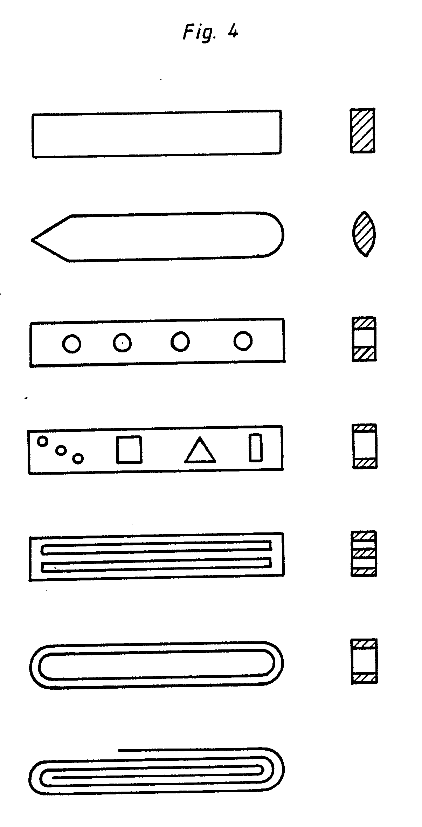

Fig. 4 zeigt Variationsmöglichkeiten von Verstärkunselementen, welche von einem einfachen brettartigen Gebilde über ein konturgeformtes Element und Elementen mit Durchbrüchen sowie Schlitzen zu ring- bzw. bügelartigen Formen bis hin zu gebogenen Drahtgebilden führen.

Neben den Draufsichten sind jeweils die Querschnittsdarstellungen der einzelnen Verstärkungselemente gezeigt. Diese Querschnitte beinhalten langgestreckte glatte Formen genauso wie rundliche oder abgewindelte Formen. Die Materialien, aus denen die Verstärkungselemente geformt sind, können gemäß dem erforderlichen Einsatzzweck ausgewählt werden.

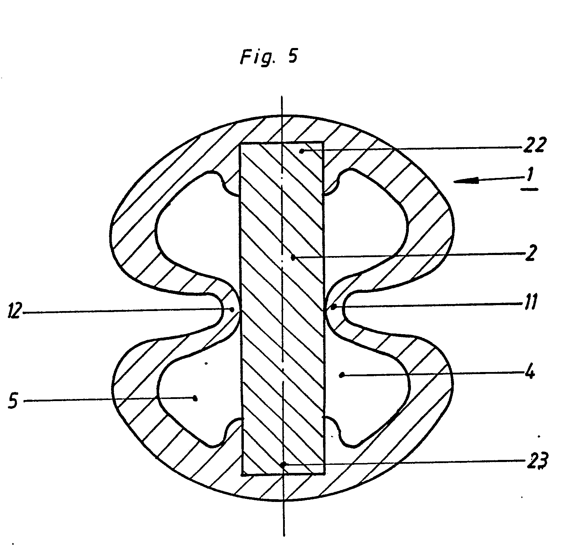

Fig. 5 zeigt schließlich eine Ausführungsform eines erfindungsgemäß hergestellten Blasformkörpers 1, bei dem das Verstärkungselement 2 nicht vollflächig von dem thermoplastischen Material umschlossen ist. Es handelt sich hier um einen rundlichen Blasformkörper, bei dem der äußere Pressdruck lediglich zum Umfließen der Stirnwandbereiche 22, 23 des Verstärkungselements 2 herangezogen worden ist.

Eine zusätzliche Befestigung des Verstärkungselementes 2 in den Hohlkammern 4, 5 ist durch die Wandeindrückungen 11, 12 erfolgt, welche durch z.B. kegelförmige Erhöhungen an den nicht gezeigten Blasformhälften erzeugt wurden. Derartige Wandeindrückungen können sich über die Länge dieses rundlichen Blasformkörpers beliebig wiederholen.

Auch bei der Ausführungsform gemäß Fig. 5 wird deutlich, daß die Wandungen des Blasformkörpers 1 im Bereich der Stirnflächen 22, 23 des Verstärkungselementes 2 neidriger liegen als in den außerhalb dieser Zonen liegenden Wandbereichen des Blasformkörpers 1.

**Ansprüche**

1. Verfahren zur Herstellung eines Blasformkörpers unter Verwendung einer zweigeteilten Blasform, wobei der Vorformling als Schlauch in thermoplastischem Materialzustand in die geöffneten Blasformhälften eingebracht und nach deren Schließen durch einen definierten Blasdruck an die inneren Konturen der Blasform angelegt und nach der Abkühlung aus der geöffneten Blasform entnommen wird, und wobei vor dem Aufblasen ein auf einer verschieblichen Haltevorrichtung befindliches Einbauteil bei geöffneter Blasform in den Vorformling eingebracht und beim Schließen der Blasform mit einem Teil der Innenwandung des Vorformlings verbunden wird, dadurch gekennzeichnet, daß beim Schließen der Blasformhälften auf die Wandbereiche des Vorformlings, die einem als Verstärkungselement ausgelegten Einbauteil benachbart sind, ein den Wandquerschnitt des Vorformlings verringernder äußere Pressdruck ausgeübt wird, und daß spätestens mit dem Einsetzen des Pressdruckes das Innere des Vorformlings mit dem Blasdruck beaufschlagt wird.

2. Verfahren nach Anspruch 1, dadurch gekennzeichnet, daß über den äußeren Pressdruck aus dem Anlagebereich zu dem Verstärkungselement thermoplastisches Material aus der Wandung des Vorformlings in dessen Hohlraum eingepresst wird, und daß dieses verpresste Material über den Blasdruck an die freiliegenden Randbereiche des Verstärkungselementes angepresst wird.

3. Verfahren nach Ansprüchen 1 und 2, dadurch gekennzeichnet, daß die freiliegenden Randbereiche des Verstärkungselementes vollflächig von dem thermoplastischen Material bedeckt werden, wobei sich stegartige Brücken zwischen den Innenwänden des Blasformkörpers bilden, welche durch den Blasdruch bis zur Beendigung des Blasformens in ihrer Form gehalten werden.

4. Verfahren nach Anspruch 3, dadurch gekennzeichnet, daß zusätzliche Brücken zwischen den Innenwänden des Blasformkörpers über beliebig geformte Durchgangsöffnungen in den Verstärkungselementen gebildet werden.

Fig. 1

Fig. 2

Fig. 3a

Fig. 3 b

3 — 4

31 — 1

2

33 — 21

32

5

Fig. 3 c

Fig. 4

Fig. 5